# EUROPÄISCHE PATENTANMELDUNG

(11) **EP 1 470 868 A2**
(43) Veröffentlichungstag der Anmeldung: **27.10.2004**
(21) Anmeldenummer: 04101673.4
(22) Anmeldetag: 22.04.2004
(51) Int. Cl.: B05D 1/26, B05D 1/00

(54) **Verfahren zur Beschichtung eines zylindrischen Körpers**

(30) Priorität: 25.04.2003 DE 10318836
(71) Anmelder: Voith Paper Patent GmbH, 89522 Heidenheim (DE)
(72) Erfinder: Breineder, Martin, NATSCHBACH (AT); Dr. Mag. Gobec, Georg, GRAZ (AT); Spiess, Johann, NEUNKIRCHEN (AT); Gamsjäger, Norbert, 2721, Bad Fischau (AT)

(57) **Zusammenfassung**

Bei einem Verfahren zum Beschichten eines zylindrischen Körpers, insbesondere Walzenkörpers, wird der zylindrische Körper in Rotation vesetzt und auf die Außen- und/oder Innenfläche des rotierenden zylindrischen Körpers eine duroplastische Gießmasse aufgebracht. Zuvor kann eine Grundschicht aufgerakelt werden. Es wird auch eine entsprechende Beschichtung angegeben.

## Beschreibung

Die Erfindung betrifft ein Verfahren zum Beschichten eines zylindrischen Körpers, insbesondere Walzenkörpers. Sie betrifft ferne eine Beschichtung eines zylindrischen Körpers bzw. Walzenkörpers.

Es sind bereits verschiedene Herstellverfahren für duroplastische Walzenbezüge bekannt.

Bei diesen bekannten Verfahren werden derzeit gefüllte Epoxidharzmischungen über mehrere Verarbeitungswege auf Walzenkörper aufgebracht. Zu diesen zählt das Vergießen der Massen in eine um die Walze errichtete Form, das Laminieren eines mit gefüllten Harzmassen getränkten Trägergewebes und das Sprühen dieser Massen auf die Walzenkörper nach bekannten Sprühverfahren.

Das Vergießen der Massen erfolgt bisher zum Beispiel in einer schlauchartigen Form, wobei z.B. Epoxidharze oder Polyurethane eingesetzt werden. Nachteilig bei den betreffenden bekannten Verfahren ist u.a., dass zwischen der Walzenoberfläche und der auszufüllenden Form ein sehr großer Spalt verbleiben muss, um Formabweichungen zu kompensieren und verfahrensgerecht arbeiten zu können. Weitere Nachteile dieser bekannten Verfahren bestehen in folgendem: sehr nachteilige Spannungsspitzen in der Bezugsschicht aufgrund eines schlecht beeinflussbaren Aushärtungsvorgangs, große Stärke bzw. Dicke der aufgebrachten Schicht aus Vergussmasse, lange Arbeitszeit für das Aufbringen der Form und den Füllprozess, hohe Bearbeitungskosten durch die große Schichtdicke, die für den Einsatz nicht gebraucht wird, hohe Entsorgungskosten für das überschüssig produzierte Material und größerer maschineller und personeller Aufwand.

Das Laminieren geschieht bisher wie folgt: ein durch ein Tauchbad gezogenes Band, z.B. aus Glas, Carbon, Polyester in gewobener oder ähnlicher Form, usw., wird auf die in einer Drehbank rotierende Walze derart aufgebracht, dass ein geschlossener Bezug auf der Walze entsteht. Es ergeben sich u.a. die folgenden Nachteile: Die Schicht, die im Laminierverfahren aufgebracht wird, ist wesentlich dicker als die spätere Nutzschicht. Die Arbeitszeit ist zwar geringer als beim zuvor genannten Gießverfahren, sie ist jedoch nach wie vor relativ lang. Auch der personelle und maschinelle Aufwand ist nach wie vor relativ hoch.

Das Versprühen von Epoxid- oder ähnlichen vernetzenden Harzformulierungen zur Beschichtung von rotierenden Zylindern ist seit langem bekannt und wird allgemein häufig angewandt. Im Vergleich zu diesen Verfahren können zylindrische rotierende Körper auch durch Sprühen von duroplastischen Massen, z.B. gefüllten Epoxidmischungen, beschichtet werden. Diese Verfahren weisen u.a. den Nachteil auf, dass sie angesichts des entstehenden Oversprays gesundheitsbedenklich und zudem in der Regel nur für sehr dünne Schichten, meistens in einer Stärke von 250 µm, geeignet sind.

Es ist auch bereits bekannt, die Bezugsschicht mittels einer Rakel, z.B. einer Spatel oder Spachtel für Fliessenkleber oder dergleichen im rotierenden Zustand aufzurakeln. Solche Verfahren weisen u.a. den Nachteil auf, dass es in der Schicht zu Blasen kommen kann. Überdies ist durch die Reaktivität und Viskosität des Materials eine wirtschaftliche Grenze der Beschichtungsstärke gegeben, da zwischen den Beschichtungsdurchgängen längere Wartezeiten in Kauf genommen werden müssen.

Es ist auch bereits das rotierende Gießen von Polyurethanmassen bekannt.

Zur rotierenden Beschichtung von zylindrischen Körpern mit Hilfe des rotierenden Gießens werden bisher im allgemeinen lediglich Polyurethan-Gießmassen verwendet.

So wird beispielsweise gemäß einem aus der EP-B1-0 636 467 bekannten Verfahren das rotierende Gießen einer Polyurethan-Masse mit Hilfe von Breitschlitzdüsen durchgeführt. Diese Technologie ist bisher ausschließlich auf Polyurethane beschränkt, da diese eine ausreichend hohe Reaktivität besitzen.

In der US 5 587 117 wird die Beschichtung eines zylindrischen Körpers in Kombination von gewickelten, ausgehärteten Bändern und rotierendem Gießen beschrieben.

Verschiedene Formulierungen für Polyurethan-Gießelastomere sind u.a. in der EP-A-1 033 380 und US-A-2001/0051219 angegeben.

Formulierungen oder Rezepturen von gefüllten Epoxidmassen oder Epoxidharzmischungen sind u.a. bereits in den folgenden Druckschriften angegeben: US 5 969 078, US 5 936 022, CN 1155434, WO 00/66338, WO 02/44273, US 6 322 730, CN 1227241, US 4 537 800 und WO 99/46344.

Der Erfindung liegt die Aufgabe zugrunde, ein verbessertes Verfahren sowie eine verbesserte Beschichtung der eingangs genannten Art zu schaffen, bei denen die zuvor genannten Nachteile beseitigt sind. Dabei soll insbesondere auch gewährleistet sein, dass eine jeweilige deckende Schicht vor allem hinsichtlich ihrer Dicke, Oberflächengestaltung und Ausprägung entsprechend den jeweiligen praktischen Anforderungen in einem weiten Bereich frei wählbar ist. Die betreffenden Beschichtungen sollen u.a. für Zylinder und/oder Walzen für die Herstellung und/oder Behandlung bahnformender Materialien dienende Maschinen geeignet sein, wobei es sich bei den genannten Materialien beispielsweise um Papier, Karton, Folien, Textilen usw. handeln kann.

Diese Aufgabe wird erfindungsgemäß gelöst durch ein Verfahren zum Beschichten eines zylindrischen Körpers, insbesondere Walzenkörpers, bei dem der zylindrische Körper in Rotation vesetzt und auf die Außen- und/oder Innenfläche des rotierenden zylindrischen Körpers eine duroplastische Gießmasse aufgebracht wird.

Aufgrund dieser Ausbildung ergibt sich insbesondere im Vergleich zum Formenguss (Vergießen) und Laminieren eine höhere Wirtschaftlichkeit, was insbesondere auf die Materialeinsparungen zurückzuführen ist. Anders als beispielsweise beim Sprühprozess und dem Laminieren werden Schadstoffemissionen vermieden, da vorreagierte Materialien auf den zylindrischen Körper aufgebracht werden. Anders als beim Versprühen kann es insbesondere auch nicht mehr zu sogenannten Oversprays kommen. Die zum Beispiel für das Aufbringen einer Bezugsoder Grundschicht und der anschließenden Bearbeitung erforderliche Prozesszeit wird auf ein Minimum reduziert. Der Bezug kann nunmehr insbesondere auch so aufgebracht werden, dass ein möglichst spannungsarmer Verbund entsteht, was einen wesentlichen Einfluss auf die mechanische und dynamische Belastbarkeit hat. Es kann in einem Prozess eine praktisch unbegrenzte Schichtdicke erzeugt werden, was beispielsweise beim Laminieren aufgrund der Exotherme beim Aushärten des Beschichtungsmaterials nicht möglich ist.

Der betreffende zylindrische Körper kann beispielsweise in eine Drehbank eingespannt und in dieser Drehbank in Drehung versetzt werden.

Gemäß einer bevorzugten praktischen Ausgestaltung des erfindungsgemäßen Verfahrens wird die Viskosität und/oder Reaktivität der duroplastischen Gießmasse so gewählt, dass diese auf dem rotierenden zylindrischen Körper haften bleibt, ohne dabei während des Beschichtungsvorgangs abzutropfen oder zu verlaufen.

Die duroplastische Gießmasse wird zweckmäßigerweise mittels einer in Axialrichtung des zylindrischen Körpers verfahrbaren Gießeinheit aufgebracht, indem diese bei rotierendem zylindrischen Körper axial entlang des zylindrischen Körpers verfahren wird. Die verfahrbare Gießeinheit kann Teil einer entsprechenden Gießmaschine sein und z.B. einen Mischkopf umfassen.

Es können eine oder mehrere Schichten erzeugt werden. Dabei wird vorzugsweise durch Aufgießen einer oder mehrerer, auch einander überlagernder Spiralen eine ein- oder mehrlagige Deckschicht erzeugt. Die nach dem Aufgießen einer ersten Spirale verbleibenden Zwischenräume können durch zumindest eine darauffolgende Spirale ausgefüllt werden.

Zum Aufgießen einer jeweiligen Spirale wird die Gießeinheit vorzugsweise mit konstantem Vorschub verfahren.

Es können beispielsweise zumindest zwei in entgegengesetzter Richtung verlaufende Spiralen aufeinanderfolgend aufgegossen werden, indem am Ende einer jeweiligen vorangehenden Spirale zum Aufgießen der unmittelbar darauffolgenden Spirale die Vorschubrichtung der Gießeinheit umgekehrt wird.

Eine jeweilige Spirale kann in Form eines Einfachgewindes oder auch in Form eines Mehrfachgewindes aufgegossen werden. Im Fall eines Einfachgewindes kann beispielsweise eine verfahrbare Gießeinheit mit nur einer Düse eingesetzt werden. Wird eine jeweilige Spirale in Form eines MehrFachgewindes aufgegossen, so kann dies beispielsweise mittels einer verfahrbaren Gießeinheit mit einer entsprechenden Anzahl von Düsen geschehen.

Die verwendeten Düsengeometrien können hierbei alle bekannten Formen aufweisen, wobei z.B. sowohl Breitschlitz- als auch Rundstrahldüsen oder auch ovale und abgewandelte Formen, mit ein- und mehrfachen Auslässen, vorgesehen sein können.

Es kann beispielsweise eine Einkomponenten-Gießmaschine oder eine Mehrkomponenten-Gießmaschine verwendet werden. Insbesondere im letzteren Fall kann die verfahrbare Gießeinheit insbesondere einen Mischkopf umfassen, in dem die verschiedenen Komponenten vor dem Aufbringen gemischt werden.

Es ist beispielsweise möglich, dass in einem durchgehenden Gießprozess der gesamte rotierende zylindrische Körper, d.h. alle Teile dieses zylindrischen Körpers, insbesondere auch die Stirnseiten und Teile der Zapfen, beschichtet werden.

Beispielsweise vor dem Aufgießen der wenigstens einen Spirale wird vorzugsweise zunächst eine gleichmäßige Grundschicht auf die z.B. sandgestrahlte Oberfläche des rotierenden zylindrischen Körpers aufgerakelt. Auch diese Grundschicht kann zweckmäßigerweise wieder aus einer duroplastischen Gießmasse erzeugt werden.

Dabei kann der Grundkörper unter anderem auch aus den folgenden Materialien bestehen: faser- und füllstoffverstärkte Matrixsysteme, insbesondere laminierte Systeme, aus Duroplasten, z.B. Epoxidharzen, Elastomeren und Thermoplasten, aber auch aus thermisch gespritzten Schichten, z.B. Carbide, Oxide usw.

Von Vorteil ist insbesondere auch, wenn der rotierende zylindrische Körper vor dem Aufbringen der wenigstens einen Spirale bzw. vor dem Aufbringen der Grundschicht gereinigt wird. Dazu kann der rotierende zylindrische Körper beispielsweise mit einem Lösemittel, z.B. mit Aceton oder dergleichen, gewaschen werden. Der gewaschene rotierende zylindrische Körper wird vor dem Aufbringen der wenigstens einen Spirale bzw. vor dem Aufbringen der Grundschicht vorzugsweise so lange gelüftet, bis das Lösemittel verdunstet ist.

Zur Haftungsverbesserung zwischen den einzelnen oder mehreren aufgebrachten Schichten und/oder dem Walzenkern können Haftvermittler, Adhäsive o.ä. verwendet werden.

Die nach dem Aufbringen der wenigstens einen Spirale erhaltene Beschichtung wird zweckmäßiger einem Temperprozess unterzogen, wodurch bestimmte Materialeigenschaften weiter verbessert werden können. Der Temperprozess kann beispielsweise bei Raumtemperatur, mittels eines IR-Strahlers, in einem Curingofen und/oder dergleichen erfolgen.

Abschließend kann durch Drehen, Fräsen, Schleifen und sonstige mechanische Bearbeitung zur Dickenreduzierung und Vorbereitung weiterer Arbeitsgänge beispielsweise in einer Schleifbank das sogenannte Übermaß, d.h. der als Sicherheit dienende Materialüberstand, entfernt werden, um eine ebene Außenfläche des zylindrischen Körpers in der gewünschten Rauhigkeit zu erzielen. Bezüglich der Rauhigkeit ist technisch z.B. ein Bereich von Ra=0,0 bis max. 6 denkbar, wobei sie meist jedoch im Bereich 0,3 bis 0,2 liegen wird.

Die duroplastische Gießmasse kann beispielsweise zumindest einen der folgenden Stoffe als Matrixmaterial enthalten: Cyanatesterharze, Phenol-Formaldehyd-Harze, allgemein duroplastische Harzsysteme, insbesondere Epoxidharze, und/oder dergleichen.

Die Matrixmaterialien können sowohl in unveränderter Form als auch in Form von formulierten Matrixsystemen mit Mischungen und/oder Modifizierungen zur gezielten Eigenschaftsverbesserung hinsichtlich der mechanischen und dynamischen Eigenschaften, z.B. Schlagzähigkeit, Bruchdehnung, Wärmeentwicklung u.a.m. modifiziert werden. Weitere Möglichkeiten werden durch interpenetrierende Netzwerke und Hybridsysteme geschaffen.

Gemäß einer zweckmäßigen Ausgestaltung des erfindungsgemäßen Verfahrens enthält das Matrixmaterial der duroplastischen Gießmasse zumindest ein Harz, dessen Viskosität in einem Bereich von etwa 100 bis etwa 5 000 000 mPa s und vorzugsweise in einem Bereich von etwa 100 000 bis etwa 3 000 000 mPa·s liegt.

Von Vorteil ist insbesondere auch, wenn das Matrixmaterial der duroplastischen Gießmasse zumindest ein Harz enthält, das zur Einstellung der Viskosität durch Thixotropierung mit aktivem Füllstoff versetzt wird. Dabei kann der aktive Füllstoff beispielsweise zumindest eine Silicaverbindung, insbesondere pyrogene Kieselsäure, z.B. Carb-O-Sil, Kurzfasern und/oder wenigstens eine Borverbindung enthalten.

Gemäß einer weiteren zweckmäßigen Ausgestaltung des erfindungsgemäßen Verfahrens enthält das Matrixmaterial der duroplastischen Gießmasse zumindest ein Harz, das zur Einstellung der Viskosität mit aktivem Füllstoff im Bereich von 0 bis etwa 20 Gewichts-% und insbesondere im Bereich von etwa 0,5 bis etwa 10 Gewichts-% versetzt wird, wobei der Füllstoff insbesondere wenigstens eine Silicaverbindung, vorzugsweise wenigstens eine pyrogene Silicaverbindung enthält.

Gemäß einer weiteren zweckmäßigen Ausgestaltung des erfindungsgemäßen Verfahrens erhält das Matrixmaterial der duroplastischen Gießmasse zumindest ein Harz oder einen Härter, die einzeln oder beide mit reaktiven Additiven, Beschleunigern, Katalysatoren, Reaktionsaktivatoren oder anderen Komponenten, die die Reaktionsgeschwindigkeit beschleunigen, zur Einstellung der Viskosität. Ebenso können gegenteilige Ausprägungen enthalten sein, die z.B. durch Inhibitoren oder gekappte Systeme entstehen.

Das Matrixmaterial der duroplastischen Gießmasse kann beispielsweise auch zumindest ein Harz enthalten, das zur Einstellung der Viskosität mit Kurzfasern (Stapel oder gemahlen) oder Faserpulp insbesondere im Bereich von 0 bis etwa 40 Gewichts-% versetzt wird, wobei die Kurzfasern bzw. der Faserpulp insbesondere aus zumindest einem der folgenden Materialien bestehen: anorganische und organische Materialien wie insbesondere Glas, Bor, Carbon, Kevlar, Polyether, Polyester, Polyamide und Mischungen derselben, vorzugsweise organische Faserstoffe aus Kevlar oder Carbon.

Eine weitere zweckmäßige praktische Ausgestaltung des erfindungsgemäßen Verfahrens zeichnet sich dadurch aus, dass das Matrixmaterial der duroplastischen Gießmasse zumindest ein Harz enthält, das zur Einstellung der Viskosität mit Füllstoff im Bereich von etwa 10 bis etwa 90 Gewichts-%, vorzugsweise im Bereich von etwa 30 bis etwa 50 Gewichts-% versetzt wird, wobei der Füllstoff insbesondere zumindest einen der folgenden Stoffe enthält: Carbide, Metalle, Silikate und deren Oxide, z.B. Chrom. Eisen, Aluminium, vorzugsweise Aluminiumoxide mit einer Korngröße im Bereich von etwa 0,002 bis etwa 5 mm und vorzugsweise im Bereich von etwa 0,01 bis etwa 0,1 mm.

Das Matrixmaterial der duroplastischen Gießmasse kann beispielsweise auch zumindest ein Harz enthalten, das zur Einstellung der Viskosität mit nanoskaligem Füllstoff im Bereich von etwa 10 bis etwa 90 Gewichts-% und vorzugsweise im Bereich von etwa 10 bis etwa 30 Gewichts-% versetzt wird.

Gemäß einer weiteren vorteilhaften Ausgestaltung des erfindungsgemäßen Verfahrens wird zur Bildung wenigstens einer antiabrasiven Lage oder Schicht die betreffende duroplastische Gießmasse mit entsprechendem Füllstoff modifiziert. Mit dem betreffenden Füllstoff werden hier also die antiabrasiven Eigenschaften der betreffenden Schicht ausgeprägt. Dabei kann die betreffende duroplastische Gießmasse beispielsweise mit Füllstoff modifiziert werden, der zumindest eines der folgenden Elemente enthält: Carbide, Metalle und deren Oxide, z.B. Chrom, Eisen, Aluminium und/oder dergleichen.

Die duroplastische Gießmasse wird vorteilhafterweise mit Füllstoff modifiziert, der eine Korngrößenverteilung im Nanobereich oder eine Korngrößenverteilung vom Nanobereich (einschließlich) bis zum Millimeterbereich (einschließlich) besitzt.

Von Vorteil ist insbesondere auch, wenn die duroplastische Gießmasse mit faserigem Füllstoff und/oder Fasern, z.B. aus Glas, Carbon, Kevlar und/oder dergleichen, versetzt wird.

Es ist grundsätzlich denkbar, das Matrixmaterial der duroplastischen Gießmasse zur Einstellung der Oberflächenspannung mit Füllstoff anorganischer und/oder organischer Natur zu versetzen.

Von Vorteil ist insbesondere, wenn die Oberflächenspannung der Beschichtung mit ionischem Füllstoff und/oder wenigstens einem Thermoplast eingestellt wird, wobei bei einem Einsatz mehrerer Komponenten diese einzeln oder im Gemisch eingesetzt werden können.

Gemäß einer zweckmäßigen praktischen Ausgestaltung des erfindungsgemäßen Verfahren wird die Rezeptur der jeweiligen duroplastischen Gießmasse durch wenigstens ein die Oberflächenspannung veränderndes Hilfsmittel modifiziert, wobei beispielsweise zumindest eines der folgenden Hilfsmittel eingesetzt werden kann: epoxymodifizierte Silikonflüssigkeit, polyalkenoxidmodifiziertes Polysiloxan, organomodifizierte Polysiloxanmischung, acryliertes Siloxan/Polyalkenoxid-Copolymer und/oder dergleichen.

Eine weitere vorteilhafte Ausgestaltung des erfindungsgemäßen Verfahrens zeichnet sich dadurch aus, dass der Füllstoff zur Einstellung der Oberflächenspannung im Bereich von 0 bis etwa 70 Gewichts-% und vorzugsweise im Bereich von etwa 5 bis etwa 15 Gewichts-% eingesetzt wird, wobei der Füllstoff insbesondere zumindest eine oder ein Gemisch zumindest eines Teils der folgenden Komponenten enthält: Metalloxide, Salze und deren Mischungen und fluorierte Thermoplaste wie z.B. Polytetrafluorethylen, wobei die einzeln oder im Gemisch einsetzbaren Komponenten vorteilhafterweise eine Korngrößenverteilung im Bereich von etwa 0,002 bis etwa 5 mm, vorzugsweise im Bereich von etwa 0,01 bis etwa 0,1 mm aufweisen.

Zur Einstellung der Oberflächenspannung kann das Matrixmaterial der duroplastischen Gießmasse beispielsweise auch mit wenigstens einem flüssigen Additiv im Bereich von 0 bis etwa 10 Gewichts-%, vorzugsweise im Bereich von etwa 0,05 bis etwa 1,5 Gewichts-% versetzt werden, wobei als flüssiges Additiv insbesondere wenigstens eine der folgenden Komponenten eingesetzt werden kann: epoxymodifizierte Silikonflüssigkeit, polyalkenoxidmodifiziertes Polysiloxan, organomodifizierte Polysiloxanmischung, acryliertes Siloxan/Polyalkenoxid-Copolymer.

Bei einer weiteren zweckmäßigen praktischen Ausgestaltung wird als Matrixmaterial der duroplastischen Gießmasse zur Einstellung der Oberflächenspannung ein fluoriniertes Matrixsystem eingesetzt.

Zur Einstellung der Oberflächenporosität kann das Matrixmaterial der duroplastischen Gießmasse z.B. auch mit löslichem Füllstoff versetzt werden, der nach der Auslösung Kavitäten hinterlässt und/oder während der Auslösung wenigstens ein Additiv freisetzt, um die Oberflächenstruktur entsprechend zu beeinflussen.

Der betreffende lösliche Füllstoff kann sich also beispielsweise so verhalten, wie ein medizinisches Retardpräparat. Dabei kann als Füllstoff beispielsweise ein Salz verwendet werden. Von Vorteil ist beispielsweise die Verwendung eines Füllstoffes, insbesondere NaCl oder KCI, mit einem Korngrößenbereich von etwa 0,001 bis etwa 5 mm und vorzugsweise von etwa 0,03 bis etwa 0,3 mm.

Zur Einstellung der Leitfähigkeit kann das Matrixmaterial der duroplastischen Gießmasse insbesondere mit leitfähigkeitserhöhendem Füllstoff versetzt werden. Dabei kann beispielsweise zumindest einer der folgenden leitfähigkeitserhöhenden Füllstoffe eingesetzt werden: Graphit, Metallpigmente, metallisierte Füllstoffe und/oder dergleichen.

Eine weitere vorteilhafte Ausgestaltung des erfindungsgemäßen Verfahrens zeichnet sich dadurch aus, dass leitfähigkeitserhöhender Füllstoff im Bereich von 0 bis etwa 60 Gewichts-%, vorzugsweise im Bereich von etwa 5 bis etwa 10 Gewichts-% und/oder mit einem Längen/Dicken-Verhältnis der Füllstoffteilchen im Bereich von 1 : 1 bis 1 : 0,001 und vorzugsweise im Bereich von 1 : 0,1 und/oder mit einer Länge der Füllstoffteilchen im Bereich von etwa 0,01 bis etwa 10 mm und vorzugsweise in einem Bereich von etwa 1 bis etwa 3 mm eingesetzt wird.

Das Beschichten kann vorteilhafterweise im MultilayerverFahren erfolgen, wobei die einzelnen Schichten bezüglich ihrer jeweiligen Eigenschaften wie z.B. ihres Füllstoffgehalts, Zusammensetzung und/oder dergleichen insbesondere während des Beschichtungsprozesses vorzugsweise getrennt voneinander modifizierbar sind.

In den Randbereichen des zylindrischen Körpers kann mehr Füllstoff, eine höhere Füllstoffkombination und/oder dergleichen als im mittleren Bereich des zylindrischen Körpers eingebracht werden. Dabei wird u.a. berücksichtigt, dass in den Randbereichen höhere Siebspannungen (Siebrand) auftreten. So kann die verfahrbare Gießeinheit z.B. wenigstens eine zusätzliche Komponente für die höhere Füllstoffkombination usw. umfassen.

Die Topfzeit der Gießmasse liegt vorzugsweise in einem Bereich von etwa 1 min bis etwa 3 h, insbesondere in einem Bereich von etwa 10 min bis etwa 1,5 h und vorzugsweise in einem Bereich von etwa 15 min bis etwa 1 h . In der Regel gilt dies für 20°C. Kurze Topfzeiten können durch Vorwärmen des Walzenkems realisiert werden.

Die Topfzeit hängt hier von der Viskosität (f(Fasern, Füllstoffe, Mischungen) und nicht, wie bei dem aus der EP-B 1-0 636 467 bekannten Verfahren von der Härte ab.

Die Vorteile des erfindungsgemäßen Verfahrens bestehen u.a. in folgendem:

Insbesondere im Vergleich zum Formenguss (Vergießen) und zum Laminieren ergibt sich infolge der Materialeinsparungen eine verbesserte Wirtschaftlichkeit. Im Vergleich zum Sprühprozess und dem Laminieren werden Schadstoffemissionen vermieden, da auf den zylindrischen Körper vorreagierte Materialien aufgebracht werden. Anders als beim Versprühen kann es nicht mehr zu sogenannten Oversprays kommen. Beim Aufbringen einer jeweiligen Bezugs- oder Grundschicht und der anschließenden Bearbeitung wird Prozesszeit eingespart. Der Bezug bzw. Beschichtung kann so aufgebracht werden, dass ein möglichst spannungsarmer Verbund entsteht, was auf die mechanische und dynamische Belastbarkeit einen wesentlichen Einfluss hat. Es kann eine praktisch unbegrenzte Schichtdicke in einem Prozess erzeugt werden, während dies beispielsweise beim Laminieren aufgrund der Exotherme beim Aushärten des Beschichtungsmaterials nicht möglich ist.

Das erfindungsgemäße Verfahren kann mit Vorteil insbesondere zur Beschichtung von Zylindern und/oder Walzen einer Maschine zur Herstellung und/oder Behandlung bahnförmiger Materialien wie insbesondere Papier, Karton, Folien, Textilien usw. angewandt werden.
Die erfindungsgemäße Beschichtung ist entsprechend dadurch gekennzeichnet, dass sie zumindest teilweise aus einer duroplastischen Gießmasse erzeugt ist.

Bevorzugte praktische Ausführungsformen der erfindungsgemäßen Beschichtung sind in den Unteransprüchen angegeben.

Die Erfindung wird im folgenden anhand eines Ausführungsbeispiels unter Bezugnahme auf die Zeichnung näher erläutert; in dieser zeigen:
- Figur 1: eine schematische Teildarstellung einer in eine Drehbank eingespannten rotierenden Walze beim Aufrakeln einer Grundschicht,
- Figur 2: eine schematische Teildarstellung der in die Drehbank eingespannten rotierenden Walze vor dem Beschichten mittels einer eine axial verfahrbare Gießeinheit umfassenden Gießmaschine,
- Figur 3: eine schematische Teildarstellung der in die Drehbank eingespannten rotierenden Walze beim Aufbringen der ersten Spirale auf die zuvor aufgebrachte Grundund/oder Haftschicht, und
- Figur 4: eine schematische Teildarstellung der in die Drehbank eingespannten rotierenden Walze beim Aufbringen wenigstens einer weiteren Spirale zum Ausfüllen des zuvor entstandenen Rillenzwischenraums.

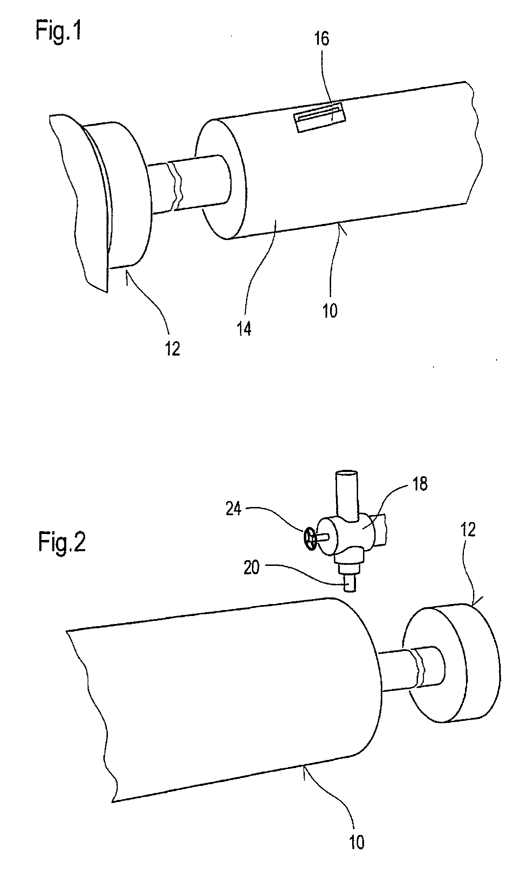

In den Fig. 1 bis 4 sind verschiedene Schritte einer rein beispielhaften Ausgestaltung des Verfahrens zur Beschichtung eines rotierenden, zylindrischen Körpers, hier einer Walze 10, mit einer vemetzenden oder duroplastischen Gießmasse wiedergegeben.

Die Walze 10 wird in der Drehbank 12 eingespannt und in Rotation versetzt. Danach wird die Walze 10 im rotierenden Zustand beispielsweise mit einem Lösemittel wie insbesondere Aceton usw. gewaschen und solange abgelüftet, bis das Lösemittel verdunstet ist.

Anschließend wird auf die z.B. sandgestrahlte Oberfläche der Walze 10 eine sehr dünne Grundschicht 14 aufgerakelt, um eine gleichmäßige Walzenoberfläche zu erhalten (vgl. Fig. 1). Gemäß Fig. 1 wird diese Grundschicht 14 zur Vergleichmäßigung der Walzenoberfläche beispielsweise mittels einer Spatel 16 oder Spachtel aufgerakelt.

Daraufhin wird auf die in der Drehbank 12 rotierende Walze 10 zumindest eine weitere, ein- oder mehrlagige Schicht aufgebracht, indem eine axial verfahrbare Gießeinheit, hier beispielsweise ein Mischkopf 18 einer Gießmaschine, axial entlang der Walzenoberfläche geführt und durch den Vorschub parallel zur Walzenachse eine Spirale auf die Oberfläche der Walze 10 aufgegossen wird.

Figur 2 zeigt den wenigstens eine Düse 20 umfassenden, z.B. mit einem Handrad 24 versehenen Mischkopf 18 vor dem Beschichten der Walze 10.

Dabei können unterschiedliche Düsengeometrien und eine unterschiedliche Anzahl von Düsenöffnungen, insbesondere so genannte Breitschlitzdüsen und/oder andere punktförmige Düsenöffnungen verwendet werden.

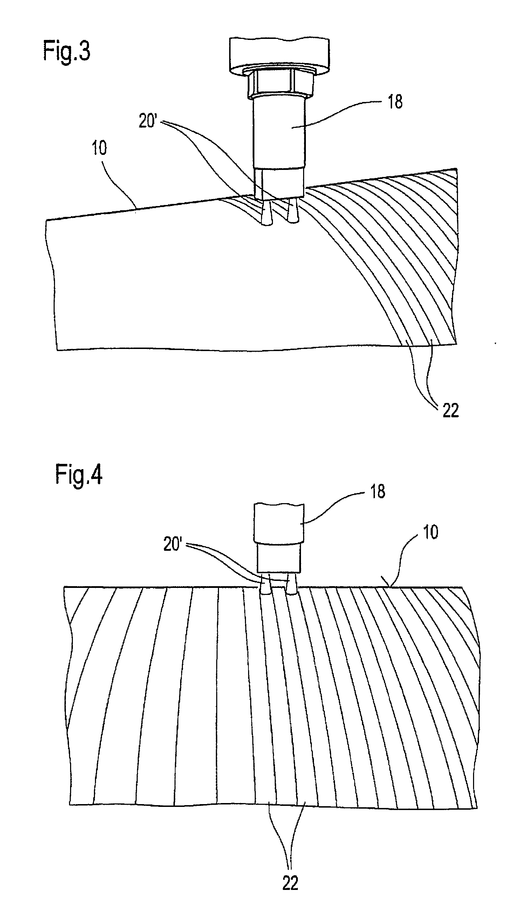

Während in der Darstellung gemäß Figur 2 beispielsweise nur eine Düse 20 vorhanden ist, ist in den Figuren 3 und 4 eine so genannte Zweifachdüse 20' zu erkennen, Während mit der nur eine Öffnung aufweisenden Einfachdüse 20 gemäß Figur 2 lediglich eine einfache Spirale auf die Walzenoberfläche gelegt wird, wird mit der beispielsweise in der Figur 3 zu erkennenden Zweifachdüse 20' eine zweifache oder Doppelspirale 22 auf die Walzenoberfläche aufgebracht. Dabei reicht eine jeweilige Spirale 22 jeweils vom einen bis zum gegenüberliegenden Walzenende.

Der Vorschub des Mischkopfes 18 wird während eines jeweiligen Durchgangs vorzugsweise konstant gehalten.

Gemäß Figur 4 kann nun in einem zweiten oder beliebigen weiteren Schritt der Rillenzwischenraum ausgefüllt werden, indem der Mischkopf 18 wenigstens ein weiteres Mal beispielsweise in umgekehrter Vorschubrichtung axial über die Walzenoberfläche geführt wird.

Durch diese Vorgehensweise wird ein Abtropfen des Materials aufgrund der Zentrifugalkraft während des Beschichtungsprozesses verhindert.

Diese Vorgehensweise führt zu spiralförmig umlaufenden Schattierungen nach dem Schleifen der Walzenoberfläche.

Der Verfahrensschritt des Aufgießens einer einfachen oder mehrfachen Spirale 22 kann zum Erreichen einer deckenden Schicht beliebig oft wiederholt werden.

Damit können z.B. mehrere Lagen, jeweils bestehend aus einer einfachen oder einer mehrfachen Spirale 22 auf die Walzenoberfläche aufgegossen werden.

Während in der Figur 3 das Aufbringen einer ersten Doppelspirale auf die zuvor aufgerakelte Grundschicht gezeigt ist, ist in der Figur 4 in schematischer Teildarstellung die in die Drehbank eingespannte rotierende Walze 10 beim Aufbringen wenigstens einer weiteren z.B. zweifachen Spirale 22 zum Ausfüllen des zuvor entstandenen Rillenzwischenraums wiedergegeben.

Die entstandene Beschichtung wird dann unter Raumtemperatur oder unter erhöhten Temperaturen, z.B. mittels eines IR-Strahlers oder eines Curingofens, einem Temperprozess unterworfen, wodurch die betreffenden Materialeigenschaften noch deutlich verbessert werden können.

Daraufhin erfolgt eine mechanische Bearbeitung der Walze 10 in einer Schleifbank, in der das sogenannte Übermaß, d.h. ein als Sicherheit dienender Materialüberstand, entfernt wird, um nach dem Schleifprozess eine ebene Fläche mit der gewünschten Rauhigkeit zu erhalten.

### Bezugszeichenliste

- 10: zylindrischer Körper, Walzenkörper, Walze
- 12: Drehbank
- 14: Grundschicht
- 16: Spatel
- 18: Gießeinheit, Mischkopf
- 20: einfache Düse
- 20': Zweifachdüse
- 22: zweifache Spirale, Doppelspirale
- 24: Handrad

## Patentansprüche

1. Verfahren zum Beschichten eines zylindrischen Körpers (10), insbesondere Walzenkörpers, bei dem der zylindrische Körper (10) in Rotation vesetzt und auf die Außen- und/oder Innenfläche des rotierenden zylindrischen Körpers (10) eine duroplastische Gießmasse aufgebracht wird.

2. Verfahren nach Anspruch 1,
**dadurch gekennzeichnet,**
**dass** die Viskosität und/oder Reaktivität der duroplastischen Gießmasse so gewählt wird, dass diese auf dem rotierenden zylindrischen Körper (10) haften bleibt, ohne dabei während des Beschichtungsvorgangs abzutropfen und zu verlaufen.

3. Verfahren nach Anspruch 1 oder 2,
**dadurch gekennzeichnet,**
**dass** die duroplastische Gießmasse mittels einer in Axialrichtung des zylindrischen Körpers (10) verfahrbaren Gießeinheit (18) aufgebracht wird, indem diese bei rotierendem zylindrischen Körper (10) axial entlang des zylindrischen Körpers (10) verfahren wird.

4. Verfahren nach Anspruch 3,
**dadurch gekennzeichnet,**
**dass** eine oder mehrere Schichten und/oder insbesondere durch Aufgießen einer oder mehrerer Spiralen (22) eine ein- oder mehrlagige Deckschicht erzeugt werden.

5. Verfahren nach Anspruch 4,
**dadurch gekennzeichnet,**
**dass** die nach dem Aufgießen einer ersten Spirale (22) verbleibenden Zwischenräume durch zumindest eine darauf folgende Spirale (22) ausgefüllt werden.

6. Verfahren nach Anspruch 4 oder 5,
**dadurch gekennzeichnet,**
**dass** die Gießeinheit (18) zum Aufgießen einer jeweiligen Spirale (22) mit konstantem Vorschub verfahren wird.

7. Verfahren nach einem der vorhergehenden Ansprüche,
**dadurch gekennzeichnet,**
**dass** zumindest zwei in entgegengesetzter Richtung verlaufende Spiralen (22) aufgegossen werden, indem am Ende einer jeweiligen vorangehenden Spirale (22) zum Aufgießen der unmittelbar darauf folgenden Spirale (22) die Vorschubrichtung der Gießeinheit (18) umgekehrt wird.

8. Verfahren nach einem der vorhergehenden Ansprüche,
**dadurch gekennzeichnet,**
**dass** eine jeweilige Spirale (22) in Form eines Einfachgewindes aufgegossen wird.

9. Verfahren nach Anspruch 8,
**dadurch gekennzeichnet,**
**dass** eine verfahrbare Gießeinheit (18) mit nur einer Düse (20) eingesetzt wird.

10. Verfahren nach einem der vorhergehenden Ansprüche,
**dadurch gekennzeichnet,**
**dass** eine jeweilige Spirale (22) in Form eines Mehrfachgewindes aufgegossen wird.

11. Verfahren nach Anspruch 10,
**dadurch gekennzeichnet,**
**dass** eine verfahrbare Gießeinheit (18) mit wenigstens zwei Düsen (20') eingesetzt wird.

12. Verfahren nach einem der vorhergehenden Ansprüche,
**dadurch gekennzeichnet,**
**dass** eine Einkomponenten-Gießmaschine eingesetzt wird.

13. Verfahren nach einem der Ansprüche 1 bis 11,
**dadurch gekennzeichnet,**
**dass** eine Mehrkomponenten-Gießmaschine eingesetzt wird.

14. Verfahren nach Ansprüche 13,
**dadurch gekennzeichnet,**
**dass** die verfahrbare Gießeinheit einen Mischkopf (18) umfasst, in dem die verschiedenen Komponenten vor dem Aufbringen gemischt werden.

15. Verfahren nach einem der vorhergehenden Ansprüche,
**dadurch gekennzeichnet,**
**dass** in einem durchgehenden Gießprozess der gesamte rotierende zylindrische Körpers (10) beschichtet wird.

16. Verfahren nach einem der vorhergehenden Ansprüche,
**dadurch gekennzeichnet,**
**dass** vor dem Aufgießen der wenigstens einen Spirale (22) zunächst eine gleichmäßige Grundschicht auf die vorzugsweise sandgestrahlte Oberfläche des rotierenden zylindrischen Körpers (10) aufgerakelt wird.

17. Verfahren nach Anspruch 16,
**dadurch gekennzeichnet,**
**dass** auch die Grundschicht aus einer duroplastischen Gießmasse erzeugt wird.

18. Verfahren nach einem der vorhergehenden Ansprüche,
**dadurch gekennzeichnet,**
**dass** der rotierende zylindrische Körper (10) vor dem Aufbringen der wenigstens einen Spirale (22) bzw. vor dem Aufbringen der Grundschicht gereinigt wird.

19. Verfahren nach Anspruch 18,
**dadurch gekennzeichnet,**
**dass** der rotierende zylindrische Körper (10) mit einem Lösemittel, z.B. mit Aceton oder dergleichen, gewaschen wird.

20. Verfahren nach Anspruch 19,
**dadurch gekennzeichnet,**
**dass** der gewaschene rotierende zylindrische Körper (10) vor dem Aufbringen der wenigstens einen Spirale (22) bzw. vor dem Aufbringen der Grundschicht so lange abgelüftet wird, bis das Lösemittel verdunstet ist.

21. Verfahren nach einem der vorhergehenden Ansprüche,
**dadurch gekennzeichnet,**
**dass** die nach dem Aufbringen der wenigstens einen Spirale (22) erhaltene Beschichtung einem Temperprozess unterzogen wird.

22. Verfahren nach Anspruch 21,
**dadurch gekennzeichnet,**
**dass** der Temperprozess bei Raumtemperatur, mittels eines IR-Strahlers, in einem Curingofen und/oder dergleichen erfolgt.

23. Verfahren nach einem der vorhergehenden Ansprüche,
**dadurch gekennzeichnet,**
**dass** abschließend durch Schleifen das Übermaß entfernt wird, um eine ebene Außenfläche des zylindrischen Körpers (10) in der gewünschten Rauhigkeit zu erhalten.

24. Verfahren nach einem der vorhergehenden Ansprüche,
**dadurch gekennzeichnet,**
**dass** die duroplastische Gießmasse zumindest einen der folgenden Stoffe als Matrixmaterial enthält: Cyanatesterharze, Phenol-Formaldehyd-Harze, allgemein duroplastische Harzsysteme, insbesondere Epoxidharze, und/oder dergleichen.

25. Verfahren nach einem der vorhergehenden Ansprüche,
**dadurch gekennzeichnet,**
**dass** das Matrixmaterial der duroplastischen Gießmasse zumindest ein Harz enthält, dessen Viskosität in einem Bereich von etwa 100 bis etwa 5 000 000 mPa s und vorzugsweise in einem Bereich von etwa 100 000 bis etwa 3 000 000 mPa s liegt.

26. Verfahren nach einem der vorhergehenden Ansprüche,
**dadurch gekennzeichnet,**
**dass** das Matrixmaterial der duroplastischen Gießmasse zumindest ein Harz enthält, das zur Einstellung der Viskosität durch Thixotropierung mit aktivem Füllstoff versetzt wird.

27. Verfahren nach Anspruch 26,
**dadurch gekennzeichnet,**
**dass** der aktive Füllstoff zumindest eine Silicaverbindung, insbesondere Carb-O-Sil, Kurzfasern und/oder wenigstens eine Borverbindung enthält.

28. Verfahren nach einem der vorhergehenden Ansprüche,
**dadurch gekennzeichnet,**
**dass** das Matrixmaterial der duroplastischen Gießmasse zumindest ein Harz enthält, das zur Einstellung der Viskosität mit aktivem Füllstoff im Bereich von 0 bis etwa 20 Gewichts-% und insbesondere im Bereich von etwa 0,5 bis etwa 10 Gewichts-% versetzt wird, wobei der Füllstoff insbesondere wenigstens eine Silicaverbindung, vorzugsweise wenigstens eine pyrogene Silicaverbindung enthält.

29. Verfahren nach einem der vorhergehenden Ansprüche,
**dadurch gekennzeichnet,**
**dass** das Matrixmaterial der duroplastischen Gießmasse zumindest ein Harz enthält, das zur Einstellung der Viskosität mit Kurzfasern (Stapel oder gemahlen) oder Faserpulp insbesondere im Bereich von 0 bis etwa 40 Gewichts-% versetzt wird, wobei die Kurzfasem bzw. der Faserpulp insbesondere aus zumindest einem der folgenden Materialien bestehen: anorganische und organische Materialien wie insbesondere Glas, Bor, Carbon, Kevlar, Polyether, Polyester, Polyamide und Mischungen derselben, vorzugsweise organische Faserstoffe aus Kevlar oder Carbon.

30. Verfahren nach einem der vorhergehenden Ansprüche,
**dadurch gekennzeichnet,**
**dass** das Matrixmaterial der duroplastischen Gießmasse zumindest ein Harz enthält, das zur Einstellung der Viskosität mit Füllstoff im Bereich von etwa 10 bis etwa 90 Gewichts-%, vorzugsweise im Bereich von etwa 30 bis etwa 50 Gewichts-% versetzt wird, wobei der Füllstoff insbesondere zumindest einen der folgenden Stoffe enthält: Carbide, Metalle, Silikate und deren Oxide, z.B. Chrom. Eisen, Aluminium, vorzugsweise Aluminiumoxide mit einer Korngröße im Bereich von etwa 0,002 bis etwa 5 mm und vorzugsweise im Bereich von etwa 0,01 bis etwa 0,1 mm.

31. Verfahren nach einem der vorhergehenden Ansprüche,
**dadurch gekennzeichnet,**
**dass** das Matrixmaterial der duroplastischen Gießmasse zumindest ein Harz enthält, das zur Einstellung der Viskosität mit nanoskaligem Füllstoff im Bereich von etwa 10 bis etwa 90 Gewichts-% und vorzugsweise im Bereich von etwa 10 bis etwa 30 Gewichts-% versetzt wird.

32. Verfahren nach einem der vorhergehenden Ansprüche,
**dadurch gekennzeichnet,**
**dass** zur Bildung wenigstens einer antiabrasiven Lage oder Schicht die betreffende duroplastische Gießmasse mit entsprechendem Füllstoff modifiziert wird.

33. Verfahren nach Anspruch 32,
**dadurch gekennzeichnet,**
**dass** die betreffende duroplastische Gießmasse mit Füllstoff modifiziert wird, der zumindest eines der folgenden Elemente enthält: Carbide, Metalle und deren Oxide, z.B. Chrom, Eisen, Aluminium und/oder dergleichen.

34. Verfahren nach einem der vorhergehenden Ansprüche,
**dadurch gekennzeichnet,**
**dass** die duroplastische Gießmasse mit Füllstoff modifiziert wird, der eine Korngrößenverteilung im Nanobereich oder eine Korngrößenverteilung vom Nanobereich (einschließlich) bis zum Millimeterbereich (einschließlich) besitzt.

35. Verfahren nach einem der vorhergehenden Ansprüche,
**dadurch gekennzeichnet,**
**dass** die duroplastische Gießmasse mit faserigem Füllstoff und/oder Fasern, z.B. aus Glas, Carbon, Kevlar und/oder dergleichen, versetzt wird.

36. Verfahren nach einem der vorhergehenden Ansprüche,
**dadurch gekennzeichnet,**
**dass** das Matrixmaterial der duroplastischen Gießmasse zur Einstellung der Oberflächenspannung mit Füllstoff anorganischer und/oder organischer Natur versetzt wird.

37. Verfahren nach einem der vorhergehenden Ansprüche,
**dadurch gekennzeichnet,**
**dass** die Oberflächenspannung der Beschichtung mit ionischem Füllstoff und/oder wenigstens einem Thermoplast eingestellt wird, wobei bei einem Einsatz mehrerer Komponenten diese einzeln oder im Gemisch einsetzbar sind.

38. Verfahren nach einem der vorhergehenden Ansprüche,
**dadurch gekennzeichnet,**
**dass** die Rezeptur der jeweiligen duroplastischen Gießmasse durch wenigstens ein die Oberflächenspannung veränderndes Hilfsmittel modifiziert wird.

39. Verfahren nach Anspruch 38,
**dadurch gekennzeichnet,**
**dass** zumindest eines der folgenden Hilfsmittel eingesetzt wird: epoxymodifizierte Silikonflüssigkeit, polyalkenoxidmodifiziertes Polysiloxan, organomodifizierte Polysiloxanmischung, acryliertes Siloxan/Polyalkenoxid-Copolymer und/oder dergleichen.

40. Verfahren nach einem der vorhergehenden Ansprüche,
**dadurch gekennzeichnet,**
**dass** der Füllstoff zur Einstellung der Oberflächenspannung im Bereich von 0 bis etwa 70 Gewichts-% und vorzugsweise im Bereich von etwa 5 bis etwa 15 Gewichts-% eingesetzt wird, wobei der Füllstoff insbesondere zumindest eine oder ein Gemisch zumindest eines Teils der folgenden Komponenten enthält: Metalloxide, Salze und deren Mischungen und fluorierte Thermoplaste wie z.B. Polytetrafluorethylen, wobei die einzeln oder im Gemisch einsetzbaren Komponenten eine Korngrößenverteilung im Bereich von etwa 0,002 bis etwa 5 mm, vorzugsweise im Bereich von etwa 0,01 bis etwa 0,1 mm aufweisen.

41. Verfahren nach einem der vorhergehenden Ansprüche,
**dadurch gekennzeichnet,**
**dass** das Matrixmaterial der duroplastischen Gießmasse zur Einstellung der Oberflächenspannung mit wenigstens einem flüssigen Additiv im Bereich von 0 bis etwa 10 Gewichts-%, vorzugsweise im Bereich von etwa 0,05 bis etwa 1,5 Gewichts-% versetzt wird, wobei als flüssiges Additiv insbesondere wenigstens eine der folgenden Komponenten eingesetzt wird: epoxymodifizierte Silikonflüssigkeit, polyalkenoxidmodifiziertes Polysiloxan, organomodifizierte Polysiloxanmischung, acryliertes Siloxan/Polyalkenoxid-Copolymer.

42. Verfahren nach einem der vorhergehenden Ansprüche,
**dadurch gekennzeichnet,**
**dass** als Matrixmaterial der duroplastischen Gießmasse zur Einstellung der Oberflächenspannung ein fluoriniertes Matrixsystem eingesetzt wird.

43. Verfahren nach einem der vorhergehenden Ansprüche,
**dadurch gekennzeichnet,**
**dass** das Matrixmaterial der duroplastischen Gießmasse zur Einstellung der Oberflächenporosität mit löslichem Füllstoff versetzt wird, der nach der Auslösung Kavitäten hinterlässt und/oder während der Auslösung wenigstens ein Additiv freisetzt, um die Oberflächenstruktur entsprechend zu beeinflussen.

44. Verfahren nach Anspruch 43,
**dadurch gekennzeichnet,**
**dass** als Füllstoff ein Salz verwendet wird.

45. Verfahren nach Anspruch 43 oder 44,
**dadurch gekennzeichnet,**
**dass** ein Füllstoff, insbesondere NaCl oder KCI, mit einem Korngrößenbereich von etwa 0,001 bis etwa 5 mm und vorzugsweise von etwa 0,03 bis etwa 0,3 mm verwendet wird.

46. Verfahren nach einem der vorhergehenden Ansprüche,
**dadurch gekennzeichnet,**
**dass** das Matrixmaterial der duroplastischen Gießmasse zur Einstellung der Leitfähigkeit mit leitfähigkeitserhöhendem Füllstoff versetzt wird.

47. Verfahren nach Anspruch 46,
**dadurch gekennzeichnet,**
**dass** zumindest einer der folgenden leitfähigkeitserhöhenden Füllstoffe eingesetzt wird: Graphit, Metallpigmente, metallisierte Füllstoffe und/oder dergleichen.

48. Verfahren nach einem der vorhergehenden Ansprüche,
**dadurch gekennzeichnet,**
**dass** leitfähigkeitserhöhender Füllstoff im Bereich von 0 bis etwa 60 Gewichts-%, vorzugsweise im Bereich von etwa 5 bis etwa 10 Gewichts-% und/oder mit einem Längen/Dicken-Verhältnis der Füllstoffteilchen im Bereich von 1 : 1 bis 1 : 0,001 und vorzugsweise im Bereich von 1 : 0,1 und/oder mit einer Länge der Füllstoffteilchen im Bereich von etwa 0,01 bis etwa 10 mm und vorzugsweise in einem Bereich von etwa 1 bis etwa 3 mm eingesetzt wird.

49. Verfahren nach einem der vorhergehenden Ansprüche,
**dadurch gekennzeichnet,**
**dass** die Beschichtung im Multilayerverfahren erfolgt, wobei die einzelnen Schichten bezüglich ihrer jeweiligen Eigenschaften wie z.B. ihres Füllstoffgehalts, Zusammensetzung und/oder dergleichen insbesondere während des Beschichtungsprozesses vorzugsweise getrennt voneinander modifizierbar sind.

50. Verfahren nach einem der vorhergehenden Ansprüche,
**dadurch gekennzeichnet,**
**dass** in den Randbereichen des zylindrischen Körpers (10) mehr Füllstoff, eine höhere Füllstoffkombination und/oder dergleichen als im mittleren Bereich des zylindrischen Körpers (10) eingebracht wird.

51. Verfahren nach Anspruch 50,
**dadurch gekennzeichnet,**
**dass** die verfahrbare Gießeinheit (18) wenigstens eine zusätzliche Komponente für die höhere Füllstoffkombination usw. umfasst.

52. Verfahren nach einem der vorhergehenden Ansprüche,
**dadurch gekennzeichnet,**
**dass** die Topfzeit der Gießmasse in einem Bereich von etwa 1 min bis etwa 3 h, insbesondere in einem Bereich von etwa 10 min bis etwa 1,5 h und vorzugsweise in einem Bereich von etwa 15 min bis etwa 1 h liegt.

53. Verwendung des Verfahrens nach einem der vorhergehenden Ansprüche zur Beschichtung von Zylindern und/oder Walzen (10) einer Maschine zur Herstellung und/oder Behandlung bahnförmiger Materialien wie insbesondere Papier, Karton, Folien, Textilien usw.

54. Beschichtung eines zylindrischer Körper (10), insbesondere Walzenkörper, hergestellt insbesondere nach dem Verfahren gemäß einem der vorhergehenden Ansprüche,
**dadurch gekennzeichnet,**
**dass** sie zumindest teilweise aus einer duroplastischen Gießmasse erzeugt ist.

55. Beschichtung nach Anspruch 54,
**dadurch gekennzeichnet,**
**dass** sie eine oder mehrere Schichten und/oder eine ein- oder mehrlagige Deckschicht umfasst.

56. Beschichtung nach Anspruch 54 oder 55,
**dadurch gekennzeichnet,**
**dass** die duroplastische Gießmasse zumindest einen der folgenden Stoffe als Matrixmaterial enthält: Cyanatesterharze, Phenol-Formaldehyd-Harze, allgemein duroplastische Harzsysteme, insbesondere Epoxidharze, und/oder dergleichen.

57. Beschichtung nach einem der vorhergehenden Ansprüche,
**dadurch gekennzeichnet,**
**dass** das Matrixmaterial der duroplastischen Gießmasse zumindest ein Harz enthält, dessen Viskosität in einem Bereich von etwa 100 bis etwa 5 000 000 mPa·s und vorzugsweise in einem Bereich von etwa 100 000 bis etwa 3 000 000 mPa·s liegt.

58. Beschichtung nach einem der vorhergehenden Ansprüche,
**dadurch gekennzeichnet,**
**dass** das Matrixmaterial der duroplastischen Gießmasse zumindest ein bezüglich der Viskosität mit aktivem Füllstoff thixotrop eingestelltes Harz enthält.

59. Beschichtung nach Anspruch 58,
**dadurch gekennzeichnet,**
**dass** der aktive Füllstoff zumindest eine Silicaverbindung, insbesondere Carb-O-Sil, Kurzfasern und/oder wenigstens eine Borverbindung enthält.

60. Beschichtung nach einem der vorhergehenden Ansprüche,
**dadurch gekennzeichnet,**
**dass** das Matrixmaterial der duroplastischen Gießmasse zumindest ein Harz enthält, dessen Viskosität mit aktivem Füllstoff im Bereich von 0 bis etwa 20 Gewichts-% und insbesondere im Bereich von etwa 0,5 bis etwa 10 Gewichts-% eingestellt ist, wobei der Füllstoff insbesondere wenigstens eine Silicaverbindung, vorzugsweise wenigstens eine pyrogene Silicaverbindung enthält.

61. Beschichtung nach einem der vorhergehenden Ansprüche,
**dadurch gekennzeichnet,**
**dass** das Matrixmaterial der duroplastischen Gießmasse zumindest ein Harz enthält, das dessen Viskosität mit Kurzfasern (Stapel oder gemahlen) oder Faserpulp insbesondere im Bereich von 0 bis etwa 40 Gewichts-% eingestellt ist, wobei die Kurzfasern bzw. der Faserpulp insbesondere aus zumindest einem der folgenden Materialien bestehen: anorganische und organische Materialien wie insbesondere Glas, Bor, Carbon, Kevlar, Polyether, Polyester, Polyamide und Mischungen derselben, vorzugsweise organische Faserstoffe aus Kevlar oder Carbon.

62. Beschichtung nach einem der vorhergehenden Ansprüche,
**dadurch gekennzeichnet,**
**dass** das Matrixmaterial der duroplastischen Gießmasse zumindest ein Harz enthält, dessen Viskosität mit Füllstoff im Bereich von etwa 10 bis etwa 90 Gewichts-%, vorzugsweise im Bereich von etwa 30 bis etwa 50 Gewichts-% eingestellt ist, wobei der Füllstoff insbesondere zumindest einen der folgenden Stoffe enthält: Carbide, Metalle, Silikate und deren Oxide, z.B. Chrom. Eisen, Aluminium, vorzugsweise Aluminiumoxide mit einer Korngröße im Bereich von etwa 0,002 bis etwa 5 mm und vorzugsweise im Bereich von etwa 0,01 bis etwa 0,1 mm.

63. Beschichtung nach einem der vorhergehenden Ansprüche,
**dadurch gekennzeichnet,**
**dass** das Matrixmaterial der duroplastischen Gießmasse zumindest ein Harz enthält, dessen Viskosität mit nanoskaligem Füllstoff im Bereich von etwa 10 bis etwa 90 Gewichts-% und vorzugsweise im Bereich von etwa 10 bis etwa 30 Gewichts-% eingestellt ist.

64. Beschichtung nach einem der vorhergehenden Ansprüche,
**dadurch gekennzeichnet,**
**dass** sie wenigstens eine antiabrasive Lage oder Schicht umfasst, die durch eine Modifizierung der betreffenden duroplastischen Gießmasse mit entsprechendem Füllstoff gebildet ist.

65. Beschichtung nach Anspruch 64,
**dadurch gekennzeichnet,**
**dass** die betreffende duroplastische Gießmasse mit Füllstoff modifiziert ist, der zumindest eines der folgenden Elemente enthält: Carbide, Metalle und deren Oxide, z.B. Chrom, Eisen, Aluminium und/oder dergleichen.

66. Beschichtung nach einem der vorhergehenden Ansprüche,
**dadurch gekennzeichnet,**
**dass** die duroplastische Gießmasse mit Füllstoff modifiziert ist, der eine Korngrößenverteilung im Nanobereich oder eine Korngrößenverteilung vom Nanobereich (einschließlich) bis zum Millimeterbereich (einschließlich) besitzt.

67. Beschichtung nach einem der vorhergehenden Ansprüche,
**dadurch gekennzeichnet,**
**dass** die duroplastische Gießmasse mit faserigem Füllstoff und/oder Fasern, z.B. aus Glas, Carbon, Kevlar und/oder dergleichen, versetzt ist.

68. Beschichtung nach einem der vorhergehenden Ansprüche,
**dadurch gekennzeichnet,**
**dass** die Oberflächenspannung des Matrixmaterials der duroplastischen Gießmasse mit Füllstoff anorganischer und/oder organischer Natur eingestellt ist.

69. Beschichtung nach einem der vorhergehenden Ansprüche,
**dadurch gekennzeichnet,**
**dass** ihre Oberflächenspannung mit ionischem Füllstoff und/oder wenigstens einem Thermoplast eingestellt ist, wobei im Fall mehrerer Komponenten diese einzeln oder im Gemisch eingebracht sind.

70. Beschichtung nach einem der vorhergehenden Ansprüche,
**dadurch gekennzeichnet,**
**dass** die Rezeptur der jeweiligen duroplastischen Gießmasse durch wenigstens ein die Oberflächenspannung veränderndes Hilfsmittel modifiziert ist.

71. Beschichtung nach Anspruch 70,
**dadurch gekennzeichnet,**
**dass** sie zumindest eines der folgenden Hilfsmittel enthält: epoxymodifizierte Silikonflüssigkeit, polyalkenoxidmodifiziertes Polysiloxan, organomodifizierte Polysiloxanmischung, acryliertes Siloxan/Polyalkenoxid-Copolymer und/oder dergleichen.

72. Beschichtung nach einem der vorhergehenden Ansprüche,
**dadurch gekennzeichnet,**
**dass** die Oberflächenspannung mit Füllstoff im Bereich von 0 bis etwa 70 Gewichts-% und vorzugsweise im Bereich von etwa 5 bis etwa 15 Gewichts-% eingestellt ist, wobei der Füllstoff insbesondere zumindest eine oder ein Gemisch zumindest eines Teils der folgenden Komponenten enthält: Metalloxide, Salze und deren Mischungen und fluorierte Thermoplaste wie z.B. Polytetrafluorethylen, wobei die einzeln oder im Gemisch einsetzbaren Komponenten eine Korngrößenverteilung im Bereich von etwa 0,002 bis etwa 5 mm, vorzugsweise im Bereich von etwa 0,01 bis etwa 0,1 mm aufweisen.

73. Beschichtung nach einem der vorhergehenden Ansprüche,
**dadurch gekennzeichnet,**
**dass** die Oberflächenspannung des Matrixmaterials der duroplastischen Gießmasse mit wenigstens einem flüssigen Additiv im Bereich von 0 bis etwa 10 Gewichts-%, vorzugsweise im Bereich von etwa 0,05 bis etwa 1,5 Gewichts-% eingestellt ist, wobei als flüssiges Additiv insbesondere wenigstens eine der folgenden Komponenten eingesetzt wird: epoxymodifizierte Silikonflüssigkeit, polyalkenoxidmodifiziertes Polysiloxan, organomodifizierte Polysiloxanmischung, acryliertes Siloxan/Polyalkenoxid-Copolymer.

74. Beschichtung nach einem der vorhergehenden Ansprüche,
**dadurch gekennzeichnet,**
**dass** als Matrixmaterial der duroplastischen Gießmasse zur Einstellung der Oberflächenspannung ein fluoriniertes Matrixsystem vorgesehen ist.

75. Beschichtung nach einem der vorhergehenden Ansprüche,
**dadurch gekennzeichnet,**
**dass** die Oberflächenporosität mit dem Matrixmaterial der duroplastischen Gießmasse zugesetztem löslichem Füllstoff einer solchen Art eingestellt ist, die nach der Auslösung Kavitäten hinterlässt und/oder während der Auslösung wenigstens ein Additiv freisetzt, um die Oberflächenstruktur entsprechend zu beeinflussen.

76. Beschichtung nach Anspruch 75,
**dadurch gekennzeichnet,**
**dass** als Füllstoff ein Salz vorgesehen ist.

77. Beschichtung nach Anspruch 75 oder 76,
**dadurch gekennzeichnet,**
**dass** ein Füllstoff, insbesondere NaCl oder KCI, mit einem Korngrößenbereich von etwa 0,001 bis etwa 5 mm und vorzugsweise von etwa 0,03 bis etwa 0,3 mm verwendet wird.

78. Beschichtung nach einem der vorhergehenden Ansprüche,
**dadurch gekennzeichnet,**
**dass** das Matrixmaterial der duroplastischen Gießmasse zur Einstellung der Leitfähigkeit mit leitfähigkeitserhöhendem Füllstoff versetzt ist.

79. Beschichtung nach Anspruch 78,
**dadurch gekennzeichnet,**
**dass** das Matrixmaterial der duroplastischen Gießmasse zumindest einen der folgenden leitfähigkeitserhöhenden Füllstoffe enthält: Graphit, Metallpigmente, metallisierte Füllstoffe und/oder dergleichen.

80. Beschichtung nach einem der vorhergehenden Ansprüche,
**dadurch gekennzeichnet,**
**dass** leitfähigkeitserhöhender Füllstoff im Bereich von 0 bis etwa 60 Gewichts-%, vorzugsweise im Bereich von etwa 5 bis etwa 10 Gewichts-% und/oder mit einem Längen/Dicken-Verhältnis der Füllstoffteilchen im Bereich von 1 : 1 bis 1 : 0,001 und vorzugsweise im Bereich von 1 : 0,1 und/oder mit einer Länge der Füllstoffteilchen im Bereich von etwa 0,01 bis etwa 10 mm und vorzugsweise in einem Bereich von etwa 1 bis etwa 3 mm vorgesehen ist.

81. Beschichtung nach einem der vorhergehenden Ansprüche,
**dadurch gekennzeichnet,**
**dass** sie mehrere Schichten umfasst, die zumindest teilweise unterschiedliche Eigenschaften, z.B. einen unterschiedlichen Füllstoffgehalt, eine unterschiedliche Zusammensetzung und/oder dergleichen, besitzen.

82. Beschichtung nach einem der vorhergehenden Ansprüche,
**dadurch gekennzeichnet,**
**dass** sie in den Randbereichen des zylindrischen Körpers mehr Füllstoff, eine höhere Füllstoffkombination und/oder dergleichen als im mittleren Bereich des zylindrischen Körpers enthält.

83. Zylinder und/oder Walze einer Maschine zur Herstellung und/oder Behandlung bahnförmiger Materialien wie insbesondere Papier, Karton, Folien, Textilien usw. mit einer Beschichtung nach einem der vorhergehenden Ansprüche.
